**Europäisches Patentamt**

**European Patent Office**

**Office européen des brevets**

(11) Veröffentlichungsnummer: **0 029 862**
**B1**

(12) EUROPÄISCHE PATENTSCHRIFT

(45) Veröffentlichungstag der Patentschrift:
**14.03.84**

(51) Int. Cl.³: **A 61 C 1/18,** A 61 C 1/08

(21) Anmeldenummer: **79104767.3**

(22) Anmeldetag: **29.11.79**

(54) Zahnärztliches Handstück mit Vorrichtung zur lösbaren Verbindung zweier Handstückteile.

(43) Veröffentlichungstag der Anmeldung:
**10.06.81 Patentblatt 81/23**

(45) Bekanntmachung des Hinweises auf die Patenterteilung:
**14.03.84 Patentblatt 84/11**

(84) Benannte Vertragsstaaten:
**AT CH DE FR GB IT SE**

(56) Entgegenhaltungen:
**DE - A - 2 908 390**
**DE - B - 1 303 576**
**DE - B - 2 151 041**
**DE - U - 6 812 282**
**DE - U - 6 903 033**
**DE - U - 7 730 361**
**US - A - 2 033 662**

(73) Patentinhaber: **SIEMENS AKTIENGESELLSCHAFT,**
**Berlin und München Wittelsbacherplatz 2,**
**D-8000 München 2 (DE)**

(72) Erfinder: **Schuss, Werner, In der Lahrbach 18,**
**D-6148 Heppenheim (DE)**

## Zahnärztliches Handstück mit Vorrichtung zur lösbaren Verbindung zweier Handstückteile

Die Erfindung bezieht sich auf ein zahnärztliches Handstück mit einem Kopfteil einschließlich Kopfgehäuse und Halsteil und einem abnehmbar daran gehalterten Griffteil sowie mit einer Vorrichtung zur Erzielung dieser lösbaren Verbindung, enthaltend wenigstens ein Rastglied in Form einer radial vorstehenden Rastnase im einen und wenigstens ein Gegenglied in Form einer zur Rastnase passenden Ausnehmung im anderen der miteinander zu verbindenden Teile sowie mit einer als Betätigungsglied dienenden und zu diesem Zweck wenigstens teilweise eine äußere Mantelfläche bildenden, radial federnden Hülse, welche die Rast- und Gegenglieder im gekuppelten Zustand in Eingriff hält und bei Ausübung eines Druckes auf die Mantelfläche außer Eingriff bringt.

Die in der zahnärztlichen Praxis am meisten verbreitete Verbindungsart für eine lösbare Verbindung von Kopf- und Griffteil eines zahnärztlichen Handstückes ist die Schraubverbindung. Eine solche Schraubverbindung, wie sie beispielsweise in der DE-B2-1 107 890 gezeigt ist, hat den Nachteil, daß der Handstückdurchmesser an der Verbindungsstelle vergrößert wird. Außerdem erlaubt eine solche Schraubverbindung insbesondere wegen des dort meist vorgesehenen Feingewindes kein ausreichend rasches Trennen und Wiederankuppeln der Handstückteile. Bekannt ist es außerdem, das Kopfteil mittels eines Bajonettverschlusses mit dem Griffteil zu verbinden (US-PS 3 229 369). Das hierzu erforderliche Verdrehen der beiden Handstückteile zueinander ist jedoch bei zahnärztlichen Hand- und Winkelstücken, insbesondere wegen der dort in der Regel vorgesehenen inkorporierten Kühlmittelleitungsführung, nicht erwünscht.

Zum Kuppeln von anderen zahnärztlichen Handstückteilen, also nicht zum Kuppeln von Kopf- und Griffteilen, sind außerdem Vorrichtungen bekannt, die einen radial vorstehenden, federbelasteten Bolzen am einen Handstückteil enthalten, der beim Ankuppeln der beiden Handstückteile in eine Ringnut am anderen Handstückteil eingreift (DE-B1-1 303 576 und DE-U-6 812 282). Zum Entkuppeln ist an anderer Stelle des einen Handstückteils ein Betätigungsknopf vorgesehen, der auf den federnd angeordneten Rastbolzen wirkt und bei Betätigung den Rastbolzen aus der Ringnut hebt. Störend ist hier der über die Handstückoberfläche vorstehende Betätigungsknopf.

Aus der DE-A1-2 908 390 ist ferner ein Kupplungsstück bekannt, welches zum Verbinden eines Griffteils eines zahnärztlichen Winkelstückes mit einem Versorgungsschlauch dient. Das Kupplungsstück enthält am einen der miteinander zu kuppelnden Teile eine mit Längsschlitzen versehene federelastische Ringhülse, an der diametral einander gegenüberliegend zwei nach innen gerichtete Rastnasen befestigt sind, die im gekuppelten Zustand einen am anderen Handstückteil angeordneten Ansatz eines Kugelringes übergreifen. Die Rastbewegung wird durch die Elastizität der Hülsenwandung der Ringhülse erreicht, wobei die axialen Schlitze zur Erhöhung der Verformbarkeit der Hülse beitragen. Beim Zusammenfügen der Teile gleiten die Rastnasen über den Kugelring, wobei sich der vollwandige Teil der Ringhülse federnd oval formt und das Einrasten bewirkt. Um die Rastnasen aus der Raststellung zu heben, muß die Hülse beidseitig an einer gegenüber den Rastnasen um 90° versetzten Stelle gedrückt werden. Mit der auf diese Weise erzielten ovalen Verformung wird das radiale Abheben der Nasen bewirkt.

Infolge der nach innen gerichteten Rastnasen muß die Ringhülse an einer gegenüber der Anordnung der Rastnasen um 90° versetzten Stelle betätigt werden. Dadurch, und letztlich auch wegen der direkt an der Hülse befestigten Rastnasen, muß, um ein sicheres Entriegeln der Rastnasen zu gewährleisten, die Hülse relativ stark verformt werden, wozu ein relativ hoher Kraftaufwand erforderlich ist.

Aufgabe der vorliegenden Erfindung ist es, eine Konstruktion anzugeben, mit der es möglich ist, Kopfteil und Griffteil eines zahnärztlichen Handstückes so lösbar miteinander zu verbinden, daß einerseits deren Durchmesser nicht, bzw. nicht nennenswert, vergrößert zu werden braucht, und daß andererseits das An- und Abkuppeln der Handstückteile einfacher, rascher und sicherer, insbesondere mit möglichst geringem Kraftaufwand, möglich ist.

Das gestellte Ziel wird bei einer Vorrichtung der eingangs genannten Gattung gemäß der Erfindung dadurch erreicht, daß die Hülse im Anschluß an das Kopfgehäuse, im Halsteil des Handstückes, angeordnet ist und dort einen Teil der Oberfläche des Handstückes bildet und in die Oberfläche des Griffteils bündig übergeht und daß die radial nach außen gerichteten Rastnasen von achsparallel sich erstreckenden Stegen getragen werden, die an der Hülse so angeordnet sind, daß die zur Betätigung wirksame Mantelfläche der Hülse im seitlichen Flächenbereich des Handstückes, der das Kopfgehäuse tangiert, liegt.

Vorteilhafte Ausgestaltungen und Weiterbildungen der Erfindung sind in den Unteransprüchen enthalten.

Ein wesentlicher Vorzug der erfindungsgemäßen Vorrichtung ist darin zu sehen, daß der Durchmesser des Kopfteils erheblich kleiner bemessen werden kann, als dies mit der üblichen Schraubverbindung möglich ist. Ein weiterer Vorzug ist in der verbesserten Handhabung zu sehen. Im Gegensatz zu den zur Verbindung von anderen Handstückteilen bekannten, in der Handhabung störenden, radial vorstehenden Betätigungsstiften oder -knöpfen liegt nunmehr eine relativ großflächige Betätigungsfläche vor, die baulich kaum aufträgt und ein rasches Lösen der Verbindung durch einfaches Andrücken auf das hülsenförmige Teil erlaubt.

Die Anordnung der Rest- und Gegenglieder ist vorteilhafterweise so getroffen, daß eine Betätigung der Mantelfläche der Hülse durch Andrükken von Daumen und Zeigefinger an die Seitenflanken des Halsteils, also in dem Bereich, der praktisch das Kopfgehäuse tangiert, erfolgt. Auf diese Weise ist ein rasches und gefahrloses An- und Abkuppeln der Teile gewährleistet.

Ein Ausführungsbeispiel der Erfindung wird nachstehend anhand der Zeichnung näher erläutert.

Es zeigt

Fig. 1 ein zahnärztliches Handstück komplett mit Antriebsteil in einer Seitenansicht,

Fig. 2 Einzelteile des Handstückes nach Fig. 1 in einer Explosionsdarstellung.

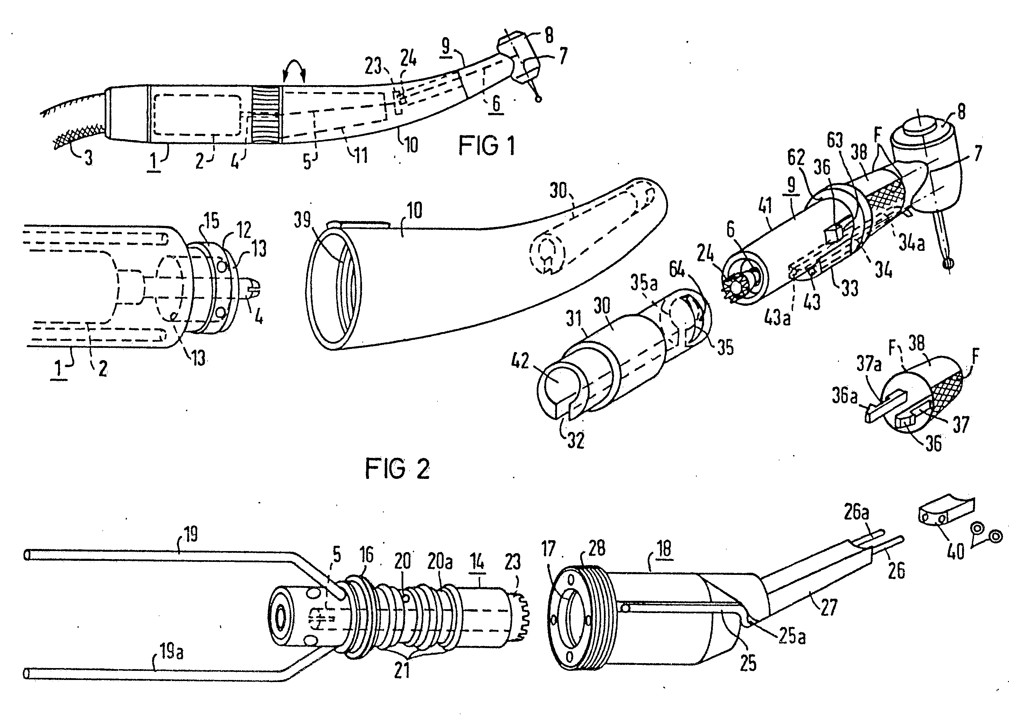

Die Fig. 1 zeigt ein zahnärztliches Handstück mit einem Antriebsteil 1, der einen mit 2 bezeichneten Antriebsmotor (Elektromotor) enthält, dem über einen Versorgungsschlauch 3 Antriebsenergie zugeführt wird. An die Antriebswelle 4 des Elektromotors schließen sich in der Figur schematisch eingezeichnete Triebwellenabschnitte 5, 6, 7 an, über die in bekannter Weise ein in einem Kopfgehäuse 8 des Handstückes drehbar gelagertes, nicht näher bezeichnetes Werkzeug angetrieben wird. Das Kopfgehäuse 8 ist Teil eines mit 9 bezeichneten Kopfteiles, welches die beiden Triebwellenabschnitte 6 und 7 sowie deren Lager aufnimmt und welches abnehmbar an einer Handstückgriffhülse 10 gehaltert ist. Die Handstückgriffhülse 10 umschließt eine mit 11 bezeichnete, aus zwei konzentrischen Hülsen bestehende Lagereinheit, die den Triebwellenabschnitt 5 sowie ein Drehlager zur Übertragung einer oder mehrerer Kühlmedien vom Antriebsteil 1 auf das Kopfteil 9 enthält. Die Handstückhülse 10 ist zusammen mit dem Kopfteil 9 und eine später noch näher bezeichnete Hülse der Lagereinheit 11 gegen das Antriebsteil 1 um die Handstücklängsachse drehbar (Pfeil).

Das Antriebsteil 1 enthält (Fig. 2) einen zylindrischen Absatz 12 mit einer in der Darstellung gestrichelt angedeuteten Eindrehung 13, in die im montierten Zustand das eine (in der Figur linke) Ende mit einer Hülse 14 eingreift. Auf den Absatz 12 ist ferner eine Kugelrastung 15 zur axialen Fixierung der Hülse 14 aufgesetzt. Die Hülse 14 enthält ferner einen in einer Nut eingelegten Federring 16, der im montierten Zustand in eine Ringnut 17 der Hülse 18 eingreift, die zusammen mit der Hülse 14 die Lagereinheit 11 bilden. An der Hülse 14 sind zwei Kühlmittelleitungen 19, 19a befestigt, deren eine Enden in bekannter Weise über radiale Bohrungen in Ringkanäle 20, 20a münden, welche durch Dichtungsringe 21 gegeneinander abgedichtet sind. Die Hülse 14 nimmt ferner noch den Triebwellenabschnitt 5 auf, der der Antriebsseite abgewandt ein Triebzahnrad 23 enthält, das im montierten Zustand mit einem Zahnrad 24 des Triebwellenabschnittes 6 kämmt. Die an der Hülse 14 vorstehenden Leitungsenden der Leitungsabschnitte 19, 19a greifen im montierten Zustand in nicht näher bezeichnete Längsnuten des Antriebsgehäuses 1 ein und sind mit im Versorgungsschlauch 3 geführten Zuführungsleitungen verbunden.

Die Hülse 18 ist im montierten Zustand konzentrisch zur Hülse 14 angeordnet und enthält Kühlmittelleitungsabschnitte 25, 25a, welche wiederum in bekannter Weise die Kühlmittel aus den Ringkanälen 20, 20a übernehmen. Die Kühlmittelleitungsabschnitte 25, 25a weisen Rohrstutzen 26, 26a auf, welche in einem schräg verlaufenden Fortsatz 27 der Hülse 18 gehaltert sind. Die Hülse 18 enthält ferner einen die Ringnut 17 für das Eingreifen des Federringes 16 enthaltenden Schraubring 28, mit dem die Hülse 18 in der Handstückhülse 10 axial festgelegt werden kann.

Mit 30 ist eine federnde, geschlitze Führungsbuchse bezeichnet, die mit Vorspannung in der Handstückhülse 10 eingeklemmt ist (siehe strichpunktierte Darstellung). Hierzu enthält die Hülse 10 eine entsprechende Eindrehung, in die ein Bund 31 der Führungsbuchse 30 einschnappt. Die Führungsbuchse 30 ist so in der Handstückhülse 10 gegen axiales Abgleiten gesichert. Die Führungsbuchse 30 ist ferner mit einem durchgehenden Längsschlitz 32 versehen, in den einerseits der Fortsatz 27 der Hülse 18 und andererseits ein längsverlaufender Ansatz 33 des Kopfteils 9 eingreift, der Kühlmittelleitungsabschnitte 34, 34a aufnimmt, die im Bereich des Kopfgehäuses 8 in eine gemeinsame Kühlmittelaustrittsdüse münden.

Die Führungsbuchse 30, die als Verdrehsicherung einerseits des Teils 18 und andererseits des Kopfteils 9 dient, enthält weiterhin zwei beidseitig am Umfang angeordnete Rastschlitze 35, 35a, in die radial federnde Rastnasen 36, 36a eingreifen, wenn das Kopfteil 9 auf der Handstückhülse axial aufgeschoben wird. Die beiden Rastnasen 36, 36a sind mittels achsparallel verlaufender Stege 37, 37a auf einer Federhülse 38 befestigt. Die Federhülse 38 ist sehr dünnwandig ausgebildet und am Kopfteil 9 so angeordnet, daß sie eine äußere Mantelfläche bildet. Bei radialem Druck auf die Hülse 38, z. B. durch Daumen und Zeigefinger einer Hand, bewegen sich die beiden Rastnasen 36, 36a radial nach innen, wodurch diese mit den Schlitzen 35, 35a außer Eingriff kommen.

Die Stege 37 brauchen nicht unbedingt fest an der Betätigungshülse 38 angeordnet zu sein; denkbar und im Rahmen der Erfindung ist auch eine Konstruktion, bei der die Stege lediglich kraftschlüssig, z. B. in einer Führungsnut der Hülse eingelegt, mit der Hülse 38 verbunden sind. Auch hinsichtlich der Anzahl der vorgesehenen Rastnasen sind Abweichungen vom dargestellten Ausführungsbeispiel möglich, ohne jedoch den Rahmen der Erfindung zu verlassen. Die Anordnung von zwei diametral einander gegenüberliegenden Rastnasen ist zwar besonders vorteilhaft; für bestimmte Zwecke ist es jedoch auch denkbar, nur eine Rastnase oder drei bzw. vier Rastnasen vorzusehen.

Im Rahmen der Erfindung liegt auch eine Ausführungsform, bei der die federnde Hülse mit ein oder mehreren Ausnehmungen am Umfang versehen ist und die Stege mit den Rastnasen am anderen Handstückteil angeordnet sind.

Zur Montage des Handstückes wird zunächst die Hülse 30 in der Handstückhülse 10 eingeklemmt. Der Ansatz 31, der in einer entsprechenden Eindrehung der Handstückhülse 10 einrastet, verhindert ein axiales Verstellen der Hülse. Danach wird die Hülse 18 in die Handstückhülse 10 eingeschoben; der Fortsatz 27 greift dabei in den Längsschlitz 32 der Buchse 30 ein. Mittels des mit einem Außengewinde versehenen Schraubringes 28 wird die Hülse 18 in der Handstückhülse 10 axial fixiert, wozu diese mit einem Innengewinde 39 versehen ist.

Die Hülse 14 ist, wie bereits erwähnt, mittels der Kugelrastvorrichtung 15 am Antriebsteil 1 verdrehsicher und axial nicht betriebsmäßig lösbar befestigt. Die Handstückhülse 10 mit der darin gehaltenen Führungsbuchse 30 und der Hülse 18 mit den Kühlmittelleitungen 25, 25a kann nun axial auf die Hülse 14 so weit aufgeschoben werden, bis der Federring 16 in der Nut 17 einrastet und die Handstückhülse somit axial fixiert werden.

Auf die beiden Rohrstutzen 26, 26a wird eine aus ein oder mehreren Elementen bestehende elastische Dichtung 40 aufgeschoben. Die Dichtung ist so ausgebildet, daß sie auf den beiden Rohrstutzen 26, 26a eng anliegt. Das Kopfteil 9 tritt mit einem Schaft- oder Halsteil 41 in die Öffnung 42 der Hülse 30 ein. Der Führungsansatz 33, der zur besseren Zentrierung ein sich zum Antriebsteil hin verjüngendes Ende aufweisen kann, greift nach einem bestimmten Einschubweg in die Schlitzführung 32 ein. Das Kopfteil 9 ist so gegen Verdrehung gesichert. Bei weiterem Einführen des Kopfteils 9 in die Handstückhülse 10 kommen schließlich die Leitungskanäle 43, 43a der Kühlmittelleitungsabschnitt 34, 34a in Eingriff mit den Rohrstutzen 26, 26a. Ein erster Anschlag 62, der die axiale Einfuhrtiefe des Schaftes 41 des Kopfteils 9 begrenzt, kann an geeigneter Stelle vorgesehen sein. Bei Erreichen des Anschlages 62 sind die Rastnasen 36, 36a mit den beiden Rastschlitzen 35, 35a in Eingriff, wodurch das Kopfteil 9 zunächst axial gegenüber der Handstückhülse 10 fixiert ist. Die Dichtung 40 gewährleistet in dieser Raststellung eine dichte Verbindung der Kühlmittelleitungsabschnitte 25, 34.

Die Dichtung 40 hat noch eine weitere Funktion zu erfüllen; sie soll nämlich für eine in axialer Richtung definierte Eingriffslage der beiden Zahnräder 23, 24 sorgen. Zu diesem Zweck stehen die beiden Rastnasen 36, 36a mit geringem Axialspiel mit den Rastschlitzen 35, 35a in Eingriff. Die Vorspannkraft der Dichtung 40, welche durch das Zusammenkuppeln der Handstückteile erzeugt wird, versucht, das Kopfteil 9 von der Griffhülse 10 wegzudrücken. Dabei ergibt sich eine in axialer Richtung eindeutige Positionierung der Handstückteile durch Anschlag der Kanten 63 der Rastnasen 36, 36a an den Kanten 64 der Rastschlitze 35, 35a. In dieser Position ist selbstverständlich der Anschlag an der Stelle 62 wieder aufgehoben.

An Stelle der elastischen Dichtung 40 kann z. B. auch ein quer zum Schlitz 34 eingelegter Federdraht, ein Federband od. dgl., vorgesehen werden, gegen den die Stirnfläche des Führungsansatzes 33 oder Teile davon anliegen. Auch hier sorgt das axial wirkende Druckmittel dafür, daß in gekuppeltem Zustand der Handstückteile eine in axialer Richtung stets definierte, gleichbleibende Eingriffsposition der Triebzahnräder 23, 24 gegeben ist.

Zum Lösen des Kopfteils 9 wird die Federhülse 38 in dem in der Darstellung mit F bezeichneten Flächenbereich, in dem sich die Rastnasen-Schlitzverbindung befindet, radial leicht zusammengedrückt. Durch das Zusammendrücken, das zweckmäßigerweise mit Daumen und Zeigefinger erfolgen kann, verformt sich die Federhülse, wodurch die Rastnasen-Schlitzverbindung 35, 36 außer Eingriff kommt. Die Anordnung der Rastverbindung in dem gezeigten Bereich erlaubt ein gefahrloses An- und Abkuppeln der Handstückteile, weil das Kopfteil praktisch nur an den Seitenflanken, also in dem Flächenbereich, der in das Kopfgehäuse tangierend übergeht, angefaßt zu werden braucht.

## Patentansprüche

1. Zahnärztliches Handstück mit einem Kopfteil (9) einschließlich Kopfgehäuse (8) und Halsteil (41) und einem abnehmbar daran gehalterten Griffteil (10, 30) sowie mit einer Vorrichtung zur Erzielung einer lösbaren Verbindung, enthaltend wenigstens ein Rastglied in Form einer radial vorstehenden Rastnase (36) im einen und wenigstens ein Gegenglied in Form einer zur Rastnase passenden Ausnehmung (35) im anderen der miteinander zu verbindenden Teile (9, 10, 30) sowie mit einer als Betätigungsglied dienenden und zu diesem Zweck wenigstens teilweise eine äußere Mantelfläche bildenden, radial federnden Hülse (38), welche die Rast- und Gegenglieder (35, 36) im gekuppelten Zustand in Eingriff hält und bei Ausübung eines Druckes auf die Mantelfläche außer Eingriff bringt, dadurch gekennzeichnet, daß die Hülse (38) im Anschluß an das Kopfgehäuse (8), im Halsteil (41) des Handstückes, angeordnet ist und dort einen Teil der Oberfläche des Handstückes bildet und in die Oberfläche des Griffstücks (10, 30) bündig übergeht und daß die radial nach außen gerichteten Rastnasen (36, 36a) von achsparallel sich erstreckenden Stegen (37, 37a) getragen werden, die an der Hülse (38) so angeordnet sind, daß die zur Betätigung wirksame Mantelfläche (F) der Hülse (38) im seitlichen Flächenbereich des Handstückes, der das Kopfgehäuse (8) tangiert, liegt.

2. Handstück nach Anspruch 1, dadurch gekennzeichnet, daß die radial nach außen gerichteten Rastnasen (36, 36a) in eine zentrische Öffnung (42) der Griffhülse (10, 30) axial einführbar sind und daß Druckmittel (40) vorhanden sind, welche die Rastnasen (36, 36a) in der Eingriffsstellung mit einer Kante (63) gegen eine Anschlagkante (64) der Ausnehmungen (35) drükken.

## Claims

1. A dental hand tool having a head part (9) including a housing (8) and a neck part (41); a gripping part (10, 30) which is detachably secured to the head part; means for producing a detachable connection including at least one locking element in the form of a radially protruding locking projection (36) in the one, and at least one counter-element in the form of a recess (35) matched to the locking projection in the other (9, 10, 30) of the parts to be connected together; and a radially elastic sleeve (38) which serves as an actuating element and for this purpose at least partially forms an outer surface, and which holds the locking and counter elements (35, 36) in engagement in the coupled state and disengages them when a pressure is exerted on the surface, characterised in that the sleeve (38) is arranged after the housing (8) and in the neck part (41) of the hand tool and forms part of the surface of the hand tool there and merges into the surface of the handle part (10, 30) so as to be flush therewith; and that the radially outwardly directed locking projections (36, 36a) are supported by cross-pieces (37, 37a) parallel to the axis which are so arranged on the sleeve (38) that the operationally active outer surface (F) of the sleeve (38) is arranged in the lateral surface region of the hand tool which is tangential to the housing (8).

2. A hand tool according to Claim 1, characterised in that the outwardly radially directed locking projections (36, 36a) can be axially inserted into the central opening (42) of the handle sleeve (10, 30) and that pressure means (40) are provided, which in the engaging position, press the locking projections (36, 36a) with an edge (63) against a stop edge (64) of the recesses (35).

## Revendications

1. Instrument à main dentaire qui comporte une pièce de tête (9), y compris un boîtier de tête (8) et une pièce formant col (41), et une pièce de préhension (10, 30) qui y est fixée de façon à pouvoir être enlevée, ainsi qu'un dispositif pour assurer un accouplement amovible, comprenant au moins un élément d'encliquetage, se présentant sous la forme d'un ergot d'encliquetage (36) faisant saillie radialement, dans une des pièces (9, 10, 30) devant être accouplées l'une avec l'autre et au moins un élément complémentaire, se présentant sous la forme d'un évidement (35) s'adaptant à l'ergot d'encliquetage, dans l'autre desdites pièces, ainsi qu'un manchon (38) qui sert d'organe d'actionnement, forme dans ce but au moins partiellement une surface périphérique extérieure et forme ressort suivant la direction radiale, manchon qui maintient les organes d'encliquetage et complémentaires (35, 36) en prise dans l'état accouplé et les dégagent l'un de l'autre lorsqu'on exerce une pression sur la surface périphérique, caractérisé par le fait que le manchon (38) fait suite au boîtier de tête (8), dans la pièce formant col (41) de l'instrument à main, et forme là une partie de la surface de l'instrument à main et se poursuit de niveau par la surface de la pièce de préhension (10, 30), et que les ergots d'encliquetage (36, 36a) dirigés radialement vers l'extérieur sont portés par des barrettes (37, 37a) qui s'étendent parallèlement à l'axe et qui sont disposées sur le manchon (38) de manière que la surface périphérique (F) du manchon (38) qui est efficace pour l'actionnement se trouve dans la région de surface latérale de la pièce à main qui est tangengte au boîtier de tête (8).

2. Instrument à main suivant la revendication 1, caractérisé par le fait que les ergots d'encliquetage (36, 36a) dirigés radialement vers l'extérieur peuvent être introduits axialement dans une ouverture centrale (2) du manchon de préhension (10, 30), et qu'il existe des moyens de pression (40) qui appuient les ergots d'encliquetage (36, 36a) dans la position de mise en prise, une arête (63) s'appuyant contre une arête de butée (64) des évidements (35).

FIG 1

FIG 2